# EUROPEAN PATENT APPLICATION

(11) **EP 1 796 441 A2**
(43) Date of publication of application: **13.06.2007**
(21) Application number: 06256243.4
(22) Date of filing: 07.12.2006
(51) Int. Cl.: H05B 41/392

(54) **Image display apparatus and power controlling method of the image display apparatus**

(30) Priority: 12.12.2005 KR 20050121672
(71) Applicant: LG Electronics Inc., Youngdungpo-Gu Seoul (KR)
(72) Inventor: Song, Woo Jung, LG Electronics DDM Group, Goomi-si, Gyeongsangbook-do 730-727 (KR)
(74) Representative: Bryn-Jacobsen, Caelia

(57) **Abstract**

Provided is an image display apparatus. The image display apparatus includes an inverter for supplying electric power to a light source, a dimming control unit for controlling the power supply of the inverter, and a control unit providing a dimming frequency selected according to an image signal inputted to the dimming control unit.

## Description

The present invention relates to an image display apparatus and a power controlling method of the image display apparatus.

An image display apparatus is classified into a self-emissive type such as a plasma display panel displaying an image using a plasma discharge system and a non-emissive type displaying an image using a light source such as a backlight lamp.

For non-emissive type display apparatus, a liquid crystal display (LCD) device is an example. The LCD includes an inverter for supplying alternating current power to a backlight lamp and a dimming circuit for continuously varying brightness of the backlight lamp.

For, as a dimming method, an analog dimming method that varies an amplitude of the voltage by detecting current flowing in the backlight lamp and feed-backing the detected current in the form of voltage has been preposed.

Recently, a bust (burst) mode type dimming (or pulse width modulation (PWM) dimming) that can realize the dimming by adjusting an on/off duty of a power supply switch according to a dimming frequency has been proposed.

The busty (bursty) mode type dimming will now be described with reference to the accompanying drawing.

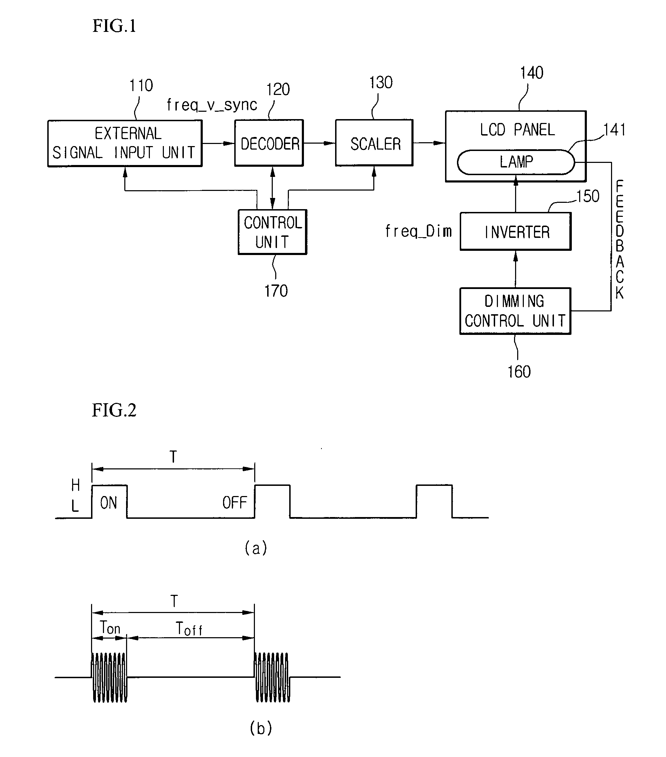

FIG. 1 illustrates an image display apparatus having a conventional dimming circuit and FIG. 2 illustrates a dimming signal of a conventional burst mode type.

Referring first to FIG. 1, an LCD device includes an outer signal input unit 110 for receiving an image signal from an external side and preprocessing the image signal, a decoder 120 for decoding the pre-processed image signal, a scaler (or a video processor 130 for converting the decoded image signal into a format appropriate for a screen on which the image will be displayed, an LCD panel 140 including a backlight lamp 141, an inverter for supplying driving alternate current power to the backlight lamp 141, a dimming control unit for performing the dimming by controlling a switching of the alternating current power supply, and a control unit 170 for generally controlling the display of the image signal as well as the dimming.

As shown in FIG. 2, the control unit 170 applies a dimming frequency (1/t) of the burst mode to the dimming control unit 160 and the inverter 150 receiving the generated dimming signal controls the on/off (Ton/Toff) of the alternating current power supply for driving the backlight lamp 141.

In addition, if required, the LCD device may further include a feedback circuit for performing an analog dimming reflecting a measuring result of the current of the backlight lamp 141.

According to the above-described LCD device, the image signals inputted from the external side have different formats having different vertical synchronizing frequencies. However, since only one dimming frequency set in the dimming control unit 160 is used, resonance is generated between the vertical synchronizing frequency freq_v_sync and the dimming frequency freq_Dim. This causes the generation of the wavy noise on a predetermined portion of the screen.

For example, when the inputted image signals having different formats have vertical synchronizing frequencies of 56Hz, 60Hz, 70Hz, 72Hz, and 75Hz while the dimming frequency set at the dimming control unit 160 is fixed at 65Hz, resonance is generated between frequencies of the image signal and the dimming control unit 160. That is, the resonance increases when the image signal has a frequency of 60Hz or 70Hz similar to the dimming frequency of 65Hz.

Furthermore, noise may be generated by the resonance between the horizontal synchronizing frequency and the dimming frequency.

In addition, the dimming frequency varies within a range of 0-10Hz by the ambient temperature variation or the component deviation. This also may cause the generation of noise.

Accordingly, the present invention is directed to an image display apparatus and a power control method of the image display apparatus that substantially obviate one or more problems due to limitations and disadvantages of the related art.

The present invention is set out in the independent claims. Some optional features are set out in the claims dependent thereto. In one aspect there is an image display apparatus that can prevent the generation of noise by performing dimming of the backlight lamp according to a format of an image signal and a power control method of the image display apparatus.

In another object there is provided an image display apparatus including: an inverter for supplying electric power to a light source; a dimming control unit for controlling the power supply of the inverter; and a control unit providing a dimming frequency selected according to an image signal inputted to the dimming control unit.

In another aspect, there is provided a method of controlling a power source of an image display apparatus, the method including: determining a format of an inputted image signal; selecting a dimming frequency according to the determined format; and providing the dimming frequency to a dimming control unit.

In a further aspect there is a method of controlling a power source of an image display apparatus comprising determining a characteristic of an inputted image signal, selecting a dimming frequency based upon the characteristic of the image signal; and providing the dimming frequency to a dimming control unit.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a view of an image display apparatus having a conventional dimming circuit;

FIG. 2 is a view illustrating a dimming signal of conventional burst mode type;

FIG. 3 is a view of an image display apparatus having a dimming circuit according to an embodiment of the present invention;

FIG. 4 is a view illustrating a dimming frequency lookup table according to an embodiment of the present invention; and

FIG. 5 is a flowchart illustrating a dimming circuit control method of an image display apparatus according to an embodiment of the present invention.

Reference will now be made in detail to the preferred embodiments of the present invention, examples of which are illustrated in the accompanying drawings. Wherever possible, the same reference numbers will be used throughout the drawings to refer to the same or like parts.

In the following apparatus, an LCD device that is a non-emissive display is exampled as an image display apparatus. However, the present invention is not limited to this example.

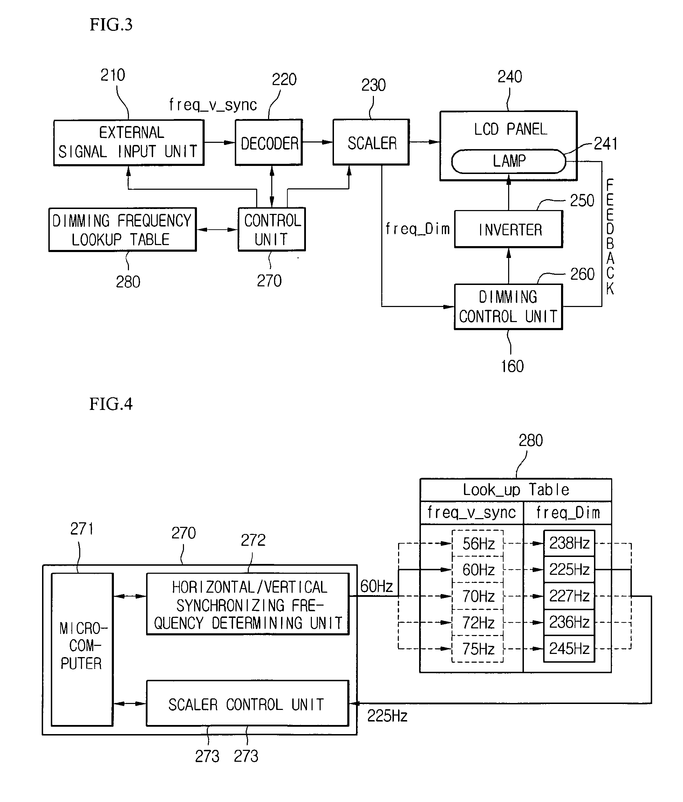

FIG. 3 is a view of an image display apparatus having a dimming circuit according to an embodiment of the present invention and FIG. 4 is a view illustrating a dimming frequency lookup table according to an embodiment of the present invention.

Referring first to FIG. 3, an image display apparatus having a dimming circuit according to an embodiment of the present invention includes an outer signal input unit 210, a decoder 220, a scaler 230, an LCD panel 240 having a backlight lamp 241, an inverter 250, a dimming control unit 260, a control unit 270, and a dimming frequency lookup table 280.

The outer signal input unit 210 is provided to process image signals inputted from an external side. The outer signal input unit 210 may include a variety of outer signal input interfaces such as an antenna cable, an RCA cable, an S-video cable, and the like. The outer signal input unit 210 may further include a tuner for selecting a channel and a de-multiplexer for separating a sound signal and an image signal from a multiplexing image signal.

The decoder 220 decodes the inputted image signal using MPEG 2.

The scaler 230 scales the image signal outputted from the decoder into a predetermined screen size or resolution and superimposes an on-screen-display (OSD) signal outputted from an OSD generator (not shown) with the image signal to display an image on the screen.

In addition, the scaler 230 provides a dimming frequency stored in the dimming frequency lookup table 280 to the dimming control unit 260. This will be described in more detail later.

At this point, the scaler 230 is provided with a variety of image control signal input/output ports so as to provide the dimming frequency value to the dimming control unit 260 without using any additional hardware.

The LCD panel 240 includes a thin film transistor (TFT) and a backlight lamp 241. In the LCD panel 240, when voltage is applied to specific liquid crystal molecules, the orientation of the molecules is changed. The change of the optical property of the liquid crystal cell by the reorientation of the liquid crystal molecules is changed into a visual change.

A cold cathode fluorescent lamp may be used as the backlight lamp 241. In addition, LEDs or an external electrode fluorescent lamp (EEFL) used for an LCD TV requiring a high luminance may also be used as the backlight lamp.

Meanwhile, the inverter 250 is provided to apply high frequency alternating current power for driving the backlight lamp 241. The dimming control unit 260 controls the light emission of the backlight lamp 241 by controlling the alternating power supplied from the inverter 250 to the backlight lamp 241. As a result, a brightness the user wants can be realized.

That is, as shown in FIG. 2, the dimming control unit 260 may be the PWM control unit that controls the light emission of the backlight lamp 241 by switching the alternative current power supply to the backlight lamp 241 according to the dimming frequency.

As shown in FIG. 4, the dimming frequency lookup table 280 is formed of memory device in which the dimming frequencies set by the user is stored. The dimming frequencies stored in the dimming frequency lookup table 280 are set to have different values according to a vertical synchronizing frequency of the inputted image signal.

For example, as shown in FIG. 4, when the vertically synchronizing frequency of the inputted image signal is 60Hz, the corresponding dimming frequency can be 225Hz.

That is, this is for that since flicker may be generated when the dimming frequency is less than 200Hz, among the frequencies higher than 200Hz, a frequency that is not positive number times the 60Hz (or a higher degree component to the 60Hz) must be selected.

Therefore, when the possibility of the flicker generation is not considered, it will be obvious that the dimming frequency that will be described later can be used.

Furthermore, the dimming frequencies may be set considering the wavy noise property variation according to the ambient temperature variation and the component error as well as the error of ±10% form a value corresponding to four times the vertical synchronizing frequency of 60Hz.

As a result, when subtracting 24Hz that is a value of ±10% of 240Hz(60HzX4) from the 240Hz, a dimming frequency of 225Hz that prevents the generation of resonance with the vertical synchronizing frequency can be set.

Dimming frequencies that are set for an input image signal having a variety of other formats and stored in the dimming frequency lookup table.

The control unit 270 determines the vertical synchronizing frequency of the inputted image signal, receives the dimming frequency value corresponding to the determined vertical synchronizing frequency from the dimming frequency lookup table 280, and provides the dimming frequency value to the dimming control unit 260.

To achieve the above, the control unit 270 includes a vertical synchronizing frequency determining unit 272 for determining the vertical synchronizing frequency of the inputted image signal, a scaler control unit 273 for providing a dimming frequency value to the scaler 230, and a microcomputer 271. The control unit 270 may further include a vertical synchronizing frequency comparing unit (not shown) for comparing a vertical synchronizing frequency of an image signal that is received earlier with a vertical synchronizing frequency of an image signal that is being currently received so as to reset the dimming frequency only when there is a vertical synchronizing frequency variation.

As described above, as compared with the prior art using only one fixed dimming frequency, the present invention provides an optical image for each image signal by selecting a proper dimming frequency according to a format of the inputted format signal.

Particularly, by performing the dimming using a frequency that does not resonate with the vertical synchronizing frequency of the inputted image signal, the resonance generation is suppressed and the wavy noise is not generated.

In addition, a feedback circuit determines the current value, which is actually supplied to the backlight lamp 241, except for the leakage current value to perform the analog dimming.

According to another embodiment of the present invention, the dimming frequency is not preset in the dimming frequency lookup table 280 but a processor unit (not shown) may be further provided to provide a dimming frequency to the scaler 230 in real-time according to the vertical synchronizing frequency of the inputted image signal.

Accordingly, even when the dimming frequency lookup table 280 is not provided, the proper dimming can be realized and prevent the noise for the inputted image signal that is not considered by the user.

A method of controlling the dimming circuit for the image display apparatus according to an embodiment of the present invention will now be described with reference to the accompanying drawings.

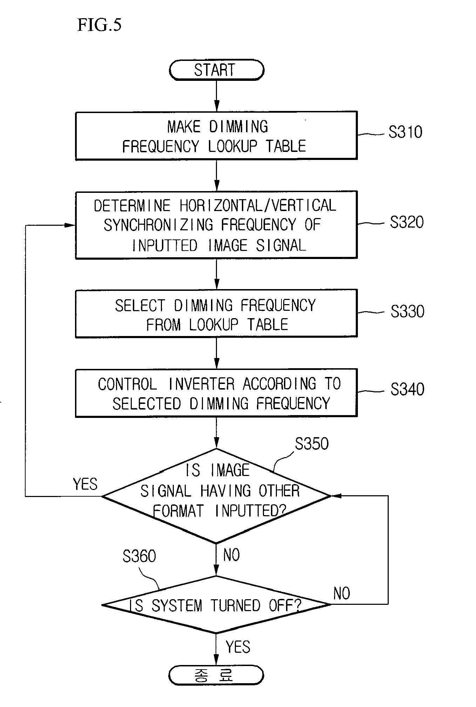

FIG. 5 is a flowchart illustrating a dimming circuit control method of an image display apparatus according to an embodiment of the present invention.

As shown in FIG. 5, dimming frequencies are set for formats of a variety of image signals that can be provided from an image signal supply source (S310).

The formats of the image signals are preferably determined using the vertical synchronizing frequency. The setting of the dimming frequencies is realized by storing frequencies that do not resonate with the vertical synchronizing frequencies of the image signals in the lookup table 280.

The selection of the dimming frequencies that do not resonate with the synchronizing frequencies are described above.

When the dimming frequencies for the image signals are set (S310) and the image signal is inputted from an external side, the vertical synchronizing frequency determining unit 272 determines the vertical synchronizing frequency of the inputted image signal (S320).

When the synchronizing frequency value is determined, the scaler control unit 273 selects a dimming frequency that does not resonate with the vertical synchronizing frequency from the dimming frequency lookup table 280 (S330) and supplies the selected dimming frequency to the scaler 230.

Then, the scaler 230 provides the dimming frequency value to the dimming control unit 260 controlling the dimming of the backlight lamp.

Generally, since a scaler IC has an input/output port for the image signal relating information, it can receive the dimming frequency from the control unit and provide the same to the dimming control unit without using any hardware.

Meanwhile, the dimming control unit 260 receiving the dimming frequency information switches the driving alternating current power supplied to the backlight lamp 241 according to the dimming frequency to perform the dimming (S340).

Then, it is determined if another image signal is inputted (S350). When it is determined that another image signal is inputted, the vertical synchronizing frequency of the image signal is determined and the above-described processes are repeated. When it is determined that another image signal is not inputted, it is determined if the system will be turned off (S360).

Furthermore, if required, the feedback circuit may be used to perform the analog dimming.

In the above description, although only the dimming frequencies that do not resonate with the vertical synchronizing frequencies of the inputted image signal are described, the present invention is not limited to this. That is, horizontal synchronizing frequencies or other properties may be applied to the present invention.

According to the present invention, since different dimming signals for the inputted image signals are applied to prevent the unnecessary resonance. Therefore, the generation of the wavy noise can be prevented and the deterioration of the system operation property due to the resonance can be prevented.

It will be apparent to those skilled in the art that various modifications and variations can be made in the present invention. Thus, it is intended that the present invention covers the modifications and variations of this invention provided they come within the scope of the appended claims and their equivalents.

## Claims

1. An image display apparatus comprising:
an inverter for supplying electric power to a light source;
a dimming control unit for controlling the power supply of the inverter;
a control unit providing a dimming frequency selected according to an image signal inputted to the dimming control unit.

2. The image display apparatus according to claim 1, wherein the control unit provides a different dimming frequency according to a format of the inputted image signal.

3. The image display apparatus according to claim 1, wherein the control unit selects the dimming frequency according at least one of vertical and horizontal synchronizing frequencies of the image signal.

4. The image display apparatus according to claim 1, further comprising a memory storing different dimming frequencies according to inputted image signals, and in which the control unit is arranged to select one of the dimming frequencies stored in the memory and to provide the selected dimming frequency.

5. The image display apparatus according to claim 4, wherein the different dimming frequencies are stored in a look-up table.

6. The image display apparatus according to claim 1, further comprising a processing unit for performing an operation on the dimming frequency according to the inputted image signal, and further in which the control unit provides the dimming frequency generated from the processing unit.

7. The image display apparatus according to claim 1, wherein the selected dimming frequency is higher than 200 Hz.

8. A method of controlling a power source of an image display apparatus, the method comprising:
determining a format of an inputted image signal;
selecting a dimming frequency according to the determined format; and
providing the dimming frequency to a dimming control unit.

9. The method according to claim 8, wherein the format of the image signal includes at least one of vertical and horizontal synchronizing frequencies.

10. The method according to claim 8, wherein the selecting of the dimming frequency comprises reading one of different dimming frequencies stored in a memory.

11. The method according to claim 8, wherein the selecting of the dimming frequency comprises performing an operation on the dimming frequency according to the format of the image signal.
